# EUROPÄISCHE PATENTSCHRIFT

(11) **EP 2 039 567 B1**
(45) Veröffentlichungstag und Bekanntmachung des Hinweises auf die Patenterteilung: **23.03.2011**
(21) Anmeldenummer: 07022465.4
(22) Anmeldetag: 20.11.2007
(51) Int. Cl.: B60Q 1/14, F21V 14/08

(54) **Projektionsscheinwerfeanordnung für Fahrzeuge**
Projection headlight assembly for vehicles
Agencement de phare de projection pour véhicules

(30) Priorität: 24.09.2007 WO PCT/EP2007/060070
(43) Veröffentlichungstag der Anmeldung: 25.03.2009
(73) Patentinhaber: Hella KGaA Hueck & Co., 59552 Lippstadt (DE); Volkswagen Aktiengesellschaft, 38436 Wolfsburg (DE)
(72) Erfinder: Schmidt, Christian, 33106 Paderborn (DE); Ehm, Matthias, 59558 Lippstadt (DE); Schneider, Arthur, 38162 Cremlingen (DE)
(74) Vertreter: Ostermann, Thomas

(56) Entgegenhaltungen:
- EP-A- 0 294 589
- EP-A- 1 769 968
- EP-A- 1 826 476
- EP-A1- 2 060 441
- WO-A-2008/037388
- WO-A1-2009/039882
- DE-A1- 4 318 315
- DE-A1-102006 043 281
- JP-A- 2004 288 415

## Beschreibung

Die Erfindung betrifft eine Projektionsscheinwerferanordnung für Fahrzeuge nach dem Oberbegriff des Patentanspruchs 1.

Aus der DE 197 39 089 A1 ist ein Projektionsscheinwerfer für Fahrzeuge bekannt, der über eine Lichtquelle, einen Reflektor, eine Linse und über eine zwischen der Linse und dem Reflektor angeordnete Blendeneinrichtung verfügt. Die Blendeneinrichtung weist mehrere in horizontaler Richtung und quer zur optischen Achse der Linse verlaufende Blendenkanten auf, welche jeweils eine Hell-Dunkel-Grenze einer vorgegebenen Lichtverteilung erzeugen. Die Blendeneinrichtung ist als eine Blendenwelle ausgebildet, die um ihre eigene Achse drehbar in mehrere Drehstellungen verstellbar angeordnet ist, wobei jeweils eine einzige Blendenkante der Blendenwelle wirksam ist. Durch die Ausgestaltung der durchgehenden Blendenkanten kann neben der Fernlicht- und Abblendlichtfunktion auch eine Stadtlicht-, Landstraßenlicht- und Autobahnlichtfunktion bereitgestellt werden. Die Anzahl der Blendenkanten ist jedoch aufgrund der begrenzten Dimensionierung der Blendenwelle begrenzt. Es handelt sich bei den durch die Blendenkanten abgebildeten Lichtverteilungen jeweils um standardisierte Lichtverteilungen, die in der jeweiligen Betriebsstellung eine fixierte Lichtverteilung unabhängig von der Verkehrssituation repräsentieren.

Aus der DE 10 2005 014 953 A1 ist eine Scheinwerferanordnung bekannt, die als Lichtquelle eine Mehrzahl von mittels einer Steuereinheit selektiv ansteuerbaren LED-Leuchtelementen aufweist. Den matrixartig angeordneten LED-Leuchtelementen ist eine Blendeneinrichtung vorgelagert, die aus matrixartig angeordneten kleinen Blendelementen aufgebaut ist. Die Blenden sind mittels der Steuereinheit selektiv in eine Öffnungs- oder Schließstellung bringbar, so dass eine Mehrzahl von unterschiedlichen Bereichen des Fahrzeugvorfeldes ausleuchtenbare Lichtbündel in Abhängigkeit von der aktuellen Verkehrssituation sich zu einer Gesamtlichtverteilung überlagern. Auf diese Weise kann ein Teilbereich (Lichtaussparungsbereich) der Fernlichtverteilung ausgespart werden - wie es beispielsweise auch aus der DE 10 2004 042 092 A1 bekannt ist -, so dass ein entgegenkommendes und/oder vorausfahrendes Fahrzeug nicht geblendet wird. Nachteilig an der bekannten Scheinwerferanordnung ist jedoch der relativ aufwendige Aufbau. Aus der nicht vorveröffentlichten WO 2008/037388 A2 ist eine Projektionsscheinwerferanordnung mit einem linken Projektionsscheinwerfer und mit einem rechten Projektionsscheinwerfer bekannt, die jeweils eine Blendeneinrichtung aufweisen, mittels derer in einer Fernlicht-Betriebsstellung der Blendeneinrichtungen unterschiedliche Teillichtverteilungen erzeugbar sind, die sich zu einer Fernlicht-Gesamtlichtverteilung überlagern. Die Blendeneinrichtungen weisen jeweils plattenförmige Blendenelemente auf, die in vertikaler Richtung linear bewegbar angeordnet sind.

Aus der EP 1 826 476 A1 ist eine Projektionsscheinwerferanordnung für Fahrzeuge mit einem linken Projektionsscheinwerfer und einem rechten Projektionsscheinwerfer bekannt. Die beiden Projektionsscheinwerfer weisen jeweils eine Lichtquelle sowie einen derselben zugeordneten Reflektor, eine Linse sowie eine Blendeneinrichtung auf. Die Blendeneinrichtung weist eine Mehrzahl von segmentartigen Blendenelementen auf, die um eine horizontale, quer zur optischen Achse verlaufenden Drehachse verschwenkbar sind. Zusätzlich sind die Mehrzahl von Blendensegmenten in vertikaler Richtung verschiebbar angeordnet. Durch die einzelne Ansteuerung der segmentartigen Blendenelemente kann situationsabhängig eine unerwünschte Blendung des entgegenkommenden oder vorausfahrenden Verkehrsteilnehmers verhindert werden, wenn sich die Projektionsscheinwerferanordnung in einer Fernlicht-Betriebsstellung befindet. Der linke und der rechte Projektionsscheinwerfer weisen gleichsinnig ausgebildete Blendeneinrichtungen auf, die im Wesentlichen die gleiche Lichtverteilung erzeugen.

EP 2 060 441 A1 ist eine nachreröffentliche Druckschrift, welche eine Projektionsscheinwerferanordnung offenbart, wobei eine linke und eine rechte Teillichtverteilung sich zu einer Fernlicht-Gesamtverteilung überlagern, die einen Lichtaussparungsbereich aufweist.

Aufgabe der vorliegenden Erfindung ist es, eine Projektionsscheinwerferanordnung für Fahrzeuge derart weiterzubilden, um platzsparend und kostengünstig eine möglichst umfassende Ausleuchtung des Fahrzeugvorfeldes zu ermöglichen, ohne dass ein entgegenkommendes und/oder vorausfahrendes Kraftfahrzeug (Fahrer) geblendet wird.

Zur Lösung dieser Aufgabe weist die Erfindung die Merkmale des Patentanspruchs 1 auf.

Der besondere Vorteil der Erfindung besteht darin, dass durch die zueinander abgestimmte unterschiedliche Ausgestaltung von Blendenkanten eines rechten und eines linken Projektionsscheinwerfers der Projektionsscheinwerferanordnung eine auf die Verkehrssituation angepasste Gesamtlichtverteilung mit optimaler Ausleuchtung des Fahrzeugerzeugt werden kann. Die für eine Verkehrssituation eingestellten Blendenkanten des linken und des rechten Projektionsscheinwerfers bilden jeweils unterschiedliche Teillichtverteilungen ab, die durch Überlagerung einen Lichtaussparungsbereich bilden können, der zumindest zu einem Teil eines vorausfahrenden und/oder entgegenkommenden Fahrzeugs korrespondiert. Die Gesamtlichtverteilung entspricht somit einer herkömmlichen Fernlichtverteilung, in der lediglich ein solcher Straßenraumbereich (Fahrzeugvorfeld) abgeschattet (ausgeblendet) wird, in dem sich zumindest ein Teil des entgegenkommenden und/oder vorausfahrenden Fahrzeugs befindet. vorteilhaft kann hierdurch eine unerwünschte Blendung des Fahrers des anderen Fahrzeugs unter Beibehaltung einer größtmöglichen Ausleuchtung des Fahrzeugvorfeldes erzielt werden.

Nach einer bevorzugten Ausführungsform der Erfindung weisen die Blendenkanten des linken und rechten Projektionsscheinwerfers jeweils auf einer der Fahrzeuglängsachse abgewandten Seite (äußeren Seite) einen in vertikaler Richtung gegenüber einem benachbarten Blendenkantenabschnitt erhöhten äußeren Blendenkantenabschnitt auf. vorteilhaft kann hierdurch ein mittlerer Lichtaussparungsbereich der Gesamtlichtverteilung erzeugt werden, wobei Flanken des Lichtaussparungsbereiches durch den horizontalen Versatz einer die Flanken abbildenden und den äußeren Blendenkantenabschnitt mit dem benachbarten inneren Blendenkantenabschnitt verbindenden Sprungkante des rechten Projektionsscheinwerfers auf der einen Seite und des linken Projektionsscheinwerfers auf der anderen Seite erzeugt werden. Vorzugsweise verläuft die Sprungkante in vertikaler Richtung, so dass eine durch den linken Projektionsscheinwerfer erzeugte erste Teillichtverteilung mit einer ersten vertikalen Hell-Dunkel-Grenze und durch den rechten Projektionsscheinwerfer erzeugte zweite Teillichtverteilung mit einer zweiten vertikalen Hell-Dunkel-Grenze erzeugt werden. Auf einfache Weise kann somit ein spaltähnlicher Lichtaussparungsbereich der Gesamtlichtverteilung erzeugt werden, dessen Breite und/oder Position abhängig von der aktuellen Position des entgegenkommenden und/oder vorausfahrenden Fahrzeugs ist. Vorteilhaft wird die Gesamtlichtverteilung lediglich durch die Verlagerung von jeweils einem dem Projektionsacheinwerfern zugeordneten, die Blendenkante aufweisenden einzigen Blendenelement erzeugt. Die Variabilität der Gesamtlichtverteilung wird somit nicht durch eine Mehrzahl von unterschiedlichen Blendenelementen bzw. Blendenkanten erzielt, sondern durch die horizontale Verstellung von Sprungkanten des rechten und linken Projektionsscheinwerfers, wobei durch dieselben in einem horizontalen Abstand zueinander angeordnete Flanken (vertikale Hell-Dunkel-Grenze) der Gesamtlichtverteilung gebildet werden. Der hierdurch gebildete Lichtaussparungsbereich der Gesamtlichtverteilung deckt somit zumindest teilweise ein vorausfahrendes und/oder entgegenkommendes Fahrzeug ab, so dass verkehrssituationsabhängig mit Ausnahme dieses ausgeblendeten Straßenraumbereiches (Fahrzeugvorfeldes) der gesamte Straßenraum entsprechend einer herkömmlichen Fernlichtverteilung ausgeleuchtet wird.

Nach einer bevorzugten Ausführungsform der Erfindung sind der rechte Projektionsscheinwerfer und der linke Projektionsscheinwerfer jeweils um eine vertikale Achse verschwenkbar gelagert. Vorteilhaft kann hierfür eine Stelleinheit für eine Kurvenlichtfunktion des Projektionsscheinwerfers genutzt werden, die mittels einer Steuereinheit in Abhängigkeit von einer die Verkehrssituation detektierenden Sensoreinheit angesteuert werden. Vorzugsweise kann ein Lichtaussparungsbereich der Gesamtlichtverteilung in Abhängigkeit von der detektierten Lage des vorausfahrenden und/oder entgegenkommenden Fahrzeugs in horizontaler Richtung variiert werden, so dass stets eine relativ starke Ausleuchtung des Straßenraumes im Umfang einer Fernlichtfunktion gegeben ist, wobei eine Blendung des vorausfahrenden bzw. entgegenkommenden Fahrzeugs verhindert wird. Für den Fahrzeugführer ergeben sich vorteilhaft keine starken Beleuchtungsdichteschwankungen bzw. starke Kontraste, da der Lichtaussparungsbereich vorzugsweise durch das entgegenkommende selbst leuchte Fahrzeug ausgefüllt wird. Vorzugsweise wird der Lichtaussparungsbereich dynamisch der aktuellen Position des entgegenkommenden Fahrzeugs nachgeführt, bis das entgegenkommende Fahrzeug das Fahrzeug des Fahrzeugsführers seitlich passiert hat. Dann schaltet die Projektionsscheinwerferanordnung schlagartig auf die Fernlichtfunktion um, in der die gegenüberliegenden Flanken der Gesamtlichtverteilung in Überdeckung gebracht werden und somit der Straßenraumbereich über die gesamte Breite ausgeleuchtet werden kann. Erst wenn wieder ein entgegenkommendes bzw. vorausfahrendes Fahrzeug detektiert wird, wird ein Lichtaussparungsbereich gebildet, der dem entsprechenden entgegenkommenden und/oder vorausfahrenden Fahrzeug nachgeführt wird.

Nach einer bevorzugten Ausführungsform der Erfindung weist die Blendeneinrichtung zwei plattenförmige Blendenelemente auf, die um eine horizontale Achse zueinander verschwenkbar gelagert sind. Vorzugsweise weist ein erstes Blendenelement eine Blendenkante enthaltend die vertikale Sprungkante auf zur Erzeugung der vertikalen Flanken der Gesamt-lichtverteilung. Ein zweites Blendenelement weist eine die vertikale Sprungkante überdeckende Blendenfläche und eine Blendenkante zur Erzeugung einer Abblendlichtverteilung auf. vorzugsweise wird das zweite Blendenelement in die Abblendlicht-Betriebsstellung nur dann verbracht, wenn beispielsweise aufgrund einer gewissen Anzahl von sich im Fahrzeugvorfeld befindlichen Fahrzeugen (Verkehrsteilnehmern) eine Aufrechterhaltung der Gesamtlichtverteilung (Fernlichtverteilung) mit Lichtaussparungsbereich ohne Blendung mindestens eines Verkehrsteilnehmers nicht mehr möglich ist. Vorteilhaft kann durch das Vorsehen von lediglich zwei Blendenelementen eine umfassende Ausleuchtung des Fahrzeugvorfeldes (adaptive Fernlichtverteilung) unter Vermeidung der Blendung von anderen Verkehrsteilnehmern erzeugt werden.

Nach einer Weiterbildung der Erfindung sind das erste Blendenelement und das zweite Blendenelement plattenförmig ausgebildet, die platzsparend nebeneinander in vertikaler Richtung angeordnet sind.

Nach einer Weiterbildung der Erfindung ist die Projektionsscheinwerferanordnung bzw. sind die Projektionsscheinwerfer mit einer Sensoreinheit und einer Steuereinheit gekoppelt, wobei mittels der Sensoreinheit die aktuelle Position des entgegenkommenden und/oder vorausfahrenden Fahrzeugs ermittelbar ist. In Abhängigkeit von den Positionsdaten kann dann die für diese Verkehrssituation passende horizontale Lage insbesondere des ersten Blendenelementes des rechten Projektionsscheinwerfer einerseits und des zweiten linken Projektionsscheinwerfers andererseits eingestellt werden, so dass eine dem Fernlicht nahe kommende Gesamtlichtverteilung erzeugt wird, wobei lediglich der Straßenraum ausgespart wird, in dem sich das entgegenkommende und/oder vorausfahrende Fahrzeug (Verkehrsteilnehmer) befindet.

Mehrere Ausführungsbeispiele der Erfindung werden nachfolgend anhand der Zeichnungen näher erläutert.

Es zeigen:

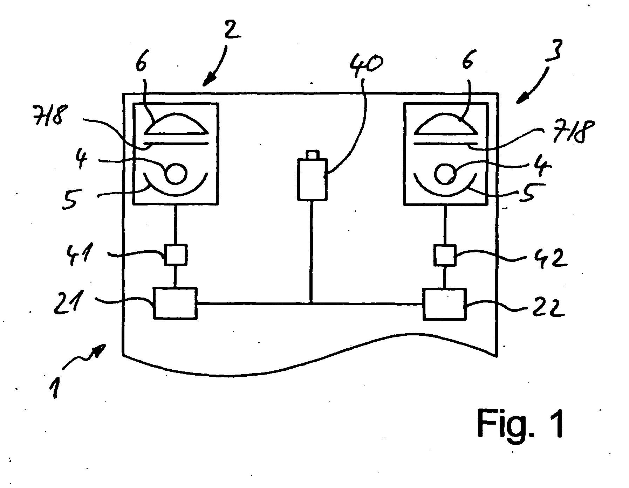

- Fig. 1: eine schematische Draufsicht auf ein Fahrzeug mit einer Projektionsscheinwerferanordnung bestehend aus einem rechten Projektionsscheinwerfer und einem linken Projektionsscheinwerfer,
- Fig. 2a: eine schematische Darstellung eines ersten Blendenelementes des linken Projektionsscheinwerfers und des rechten Projektionsscheinwerfers, die jeweils eine vertikale Sprungkante (vertikale Blendenkante) aufweisen,
- Fig. 2b: eine schematische Darstellung einer Gesamtlichtverteilung bestehend aus einer durch den linken Projektionsscheinwerfer erzeugten ersten Teillichtverteilung und einer durch den rechten Projektionsscheinwerfer erzeugten rechten Teillichtverteilung, wobei durch die Abbildung der Sprungkanten der jeweils dem Projektionsscheinwerfer zugeordneten ersten Blendenelemente in Form von vertikalen Flanken ein Lichtaussparungsbereich begrenzt wird,
- Fig. 2c: eine schematische Darstellung der Gesamtlichtverteilung, bei der die ersten Blendenelemente bzw. der rechte und der linke Projektionsscheinwerfer aus einer in Figur 2a dargestellten mittleren Schwenkstellung in eine rechte Schwenkstellung verstellt worden sind,
- Fig. 2d: eine schematische Darstellung der Gesamtlichtverteilung, bei der die ersten Blendenelemente bzw. der rechte und der linke Projektionsscheinwerfer aus einer in Figur 2a dargestellten mittleren Schwenkstellung in eine linke Schwenkstellung verstellt worden sind,
- Fig. 2e: eine Darstellung der Gesamtlichtverteilung, bei der eine Breite B des mittleren Lichtaussparungsbereiches im Vergleich zu der Schwenkstellung in Figur 2c durch Versschwenken der ersten Blendenelemente bzw. der Projektionsscheinwerfer nach außen von der Fahrzeugmittelebene weg vergrößert worden ist,
- Fig. 3a: eine vergrößerte Darstellung einer durch das erste Blendenelement und das zweite Blendenelement gebildeten Blendenanordnung in einer Fernlicht-Betriebsstellung und
- Fig. 3b: eine vergrößerte Darstellung der Blendenanordnung in einer Abblendlicht-Betriebsstellung, in der die vertikale Sprungkante des ersten Blendenelementes durch das zweite Blendenelement überdeckt ist.

Eine erfindungsgemäße Projektionsscheinwerferanordnung 1 besteht im Wesentlichen aus einem linken Projektionsscheinwerfer 2 und einem rechten Projektionsscheinwerfer 3, die jeweils eckseitig in einer Karosserieöffnung eines Fahrzeugs bugseitig eingefasst sind.

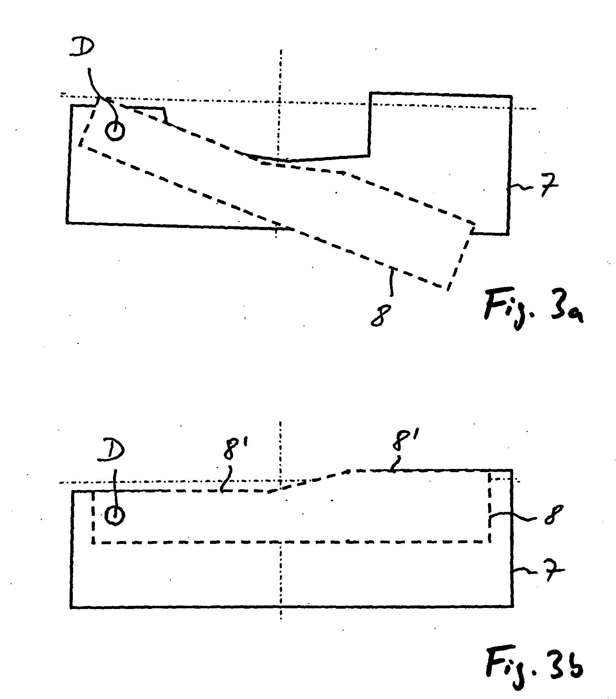

Der linke Projektionsscheinwerfer 2 und der rechte Projektionsscheinwerfer 3 weisen jeweils einen schalenförmigen Reflektor 5 auf, an dessen ersten Brennort eine Lichtquelle 4 angeordnet ist. In der Nähe eines zweiten Brennpunktes des Reflektors 5 ist eine Linse 6 angeordnet. Der linke Projektionsscheinwerfer 2 und der rechte Projektionsscheinwerfer 3 weisen jeweils eine zwischen dem Reflektor 5 und der Linse 6 angeordnete Blendeneinrichtung auf. Wie besser aus den Figuren 3a und 3b zu ersehen ist, bestehen die den jeweiligen Projektionsscheinwerfern 2, 3 zugeordneten Blendeneinrichtungen zum einen aus einem ersten Blendenelement 7 mit einer Blendenkante zur Erzeugung einer Fernlichtverteilung und zum anderen aus einem zweiten Blendenelement 8 mit einer Blendenkante zur Erzeugung einer Abblendlichtverteilung. Vorzugsweise ist das erste Blendenelement 7 fest mit einem Tragrahmen des linken Projektionsscheinwerfers 2 bzw. des rechten Projektionsscheinwerfers 3 verbunden. Das zweite Blendenelement 8 ist um eine horizontale Drehachse D relativ zu dem ersten Blendenelement 7 schwenkbar an dem nicht dargestellten Tragrahmen und/oder dem ersten Blendenelement 7 gelagert.

In Figur 3a ist die dem linken Projektionsscheinwerfer 2 zugeordnete Blendeneinrichtung in einer Fernlicht-Betriebsstellung dargestellt, in der das zweite Blendenelement 8 im Wesentlichen unterhalb der Blendenkante des ersten Blendenelementes 7 angeordnet ist. In Figur 3b ist die Blendeneinrichtung des linken Projektionsscheinwerfers 2 in einer Abblendlichtbetriebsstellung dargestellt, in der das zweite Blendenelement 8 unter im Wesentlichen Überdeckung der Blendkante des ersten Blendenelementes 7 in einer oberen Stellung angeordnet ist, so dass die Blendenkante 8' abgebildet wird zu einer Hell-Dunkel-Grenze mit einem 15°-Anstieg einer herkömmlichen Abblendlichtverteilung. Die zweiten Blendenelemente 8 des linken Projektionsscheinwerfers 3 und des rechten Projektionsscheinwerfers 3 sind jeweils gleich ausgebildet. Das erste Blendenelement 7 und das zweite Blendenelement 8 sind plattenförmig und benachbart zueinander ausgebildet und erstrecken sich in vertikaler Richtung und senkrecht zur optischen Achse.

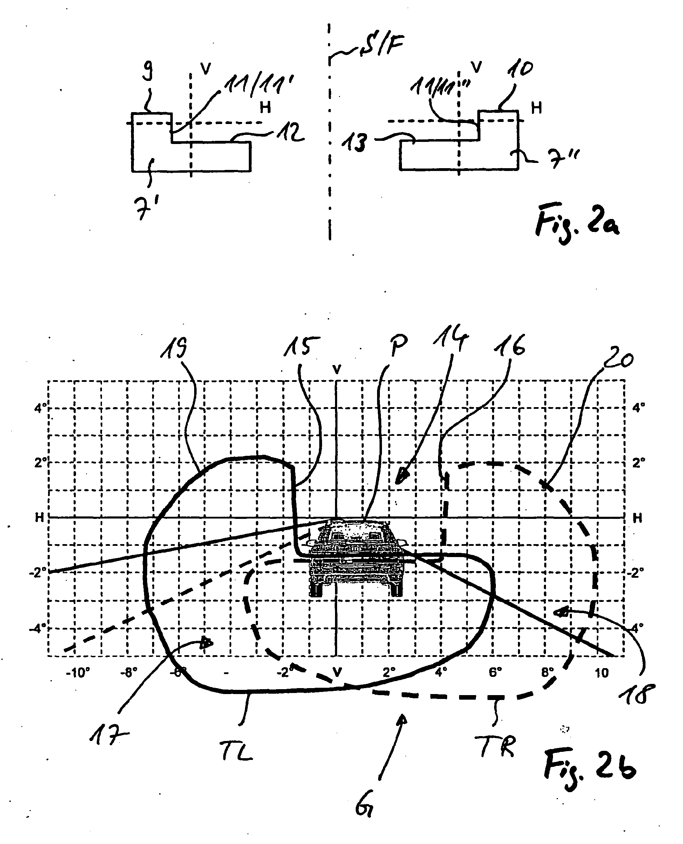

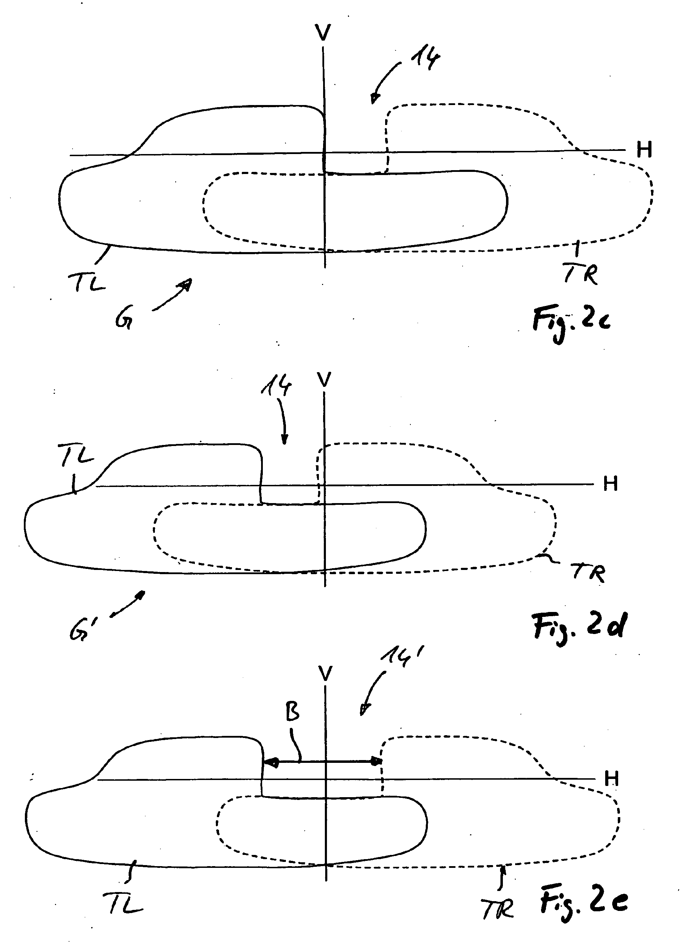

In Figur 2a sind aus Vereinfachungsgründen ein dem linken Projektionsscheinwerfer 2 zugeordnetes erstes Blendenelement 7' und ein dem zweiten rechten Projektionsscheinwerfer 3 zugeordnetes erstes Blendenelement 7" dargestellt. Das erste Blendenelement 7' des linken Projektionsscheinwerfers 3 ist bezüglich einer vertikalen Spiegelebene S, die im Bereich einer Fahrzeuglängsachse F angeordnet sein kann, gespiegelt zu dem ersten Blendenelement 7' des rechten Projektionsscheinwerfers 3 angeordnet. Auf einer der Fahrzeugslängsachse F abgewandten Seite der erste Blendenelemente 7', 7" ist ein erhöhter äußerer Blendenkantenabschnitt 9 bzw. 10 gebildet. Der äußere Blendenkantenabschnitt 9, 10 ist über eine vorzugsweise in vertikaler Richtung verlaufende Sprungkante 11 gegenüber einem inneren Blendenkantenabschnitt 12 bzw. 13 parallel versetzt angeordnet. Die ersten Blendenelemente 7', 7" der Projektionsscheinwerfer 2, 3 weisen somit die gleiche Blendengeometrie auf. Die ersten Blendenelemente 7', 7" der Projektionsscheinwerfer 2, 3 sind jedoch bezüglich einer vertikalen Ebene S gespiegelt angeordnet.

Wie aus Figur 2b zu ersehen ist, überlagern sich in der Fernlichtbetriebsstellung eine durch den linken Projektionsscheinwerfer 2 erzeugte erste Teillichtverteilung (linke Teillichtverteilung TL) und eine durch den rechten Projektionsscheinwerfer 3 gebildete zweite Teillichtverteilung (rechte Teillichtverteilung TR - gestrichelt gezeichnet) zu einer Fernlicht-Gesamtlichtverteilung G, die in der Mitte einen mittleren Lichtaussparungsbereich 14 aufweist. Der mittlere Lichtaussparungsbereich 14 wird durch eine erste Flanke 15 der ersten Teillichtverteilung TL und eine zweite Flanke 16 der zweiten Teillichtverteilung TR begrenzt. Die Fernlicht-Gesamtlichtverteilung G entspricht einer herkömmlichen Fernlichtverteilung mit dem Unterschied, dass ein mittlerer Bereich, in dem sich die Vertikale V erstreckt, von der Ausleuchtung ausgespart ist. Hierdurch kann die Blendung eines im mittleren Straßenraum befindlichen vorausfahrenden Fahrzeugs P verhindert werden, ansonsten ist aber eine umfassende Ausleuchtung des Straßenraums gewährleistet.

Die erste Teillichtverteilung TL und die zweite Teillichtverteilung TR weisen jeweils einen Basisleuchtbereich 17 bzw. 18 auf, wobei sich von dem Basisleuchtbereich 17 der linken Teillichtverteilung TL auf einer linken Seite ein linker Leuchtfingerbereich 19 und sich von dem Basisleuchtbereich 18 der rechten Teillichtverteilung TR auf einer rechten Seite ein rechter Leuchtfingerbereich 20 einen hinteren Straßenbereich ausleuchtet.

Nach der Erfindung wird die Sprungkante 11' des dem linken Projektionsscheinwerfers 2 zugeordneten ersten Blendenelementes 7' zu der ersten vertikalen Flanke 15 (vertikale Hell-Dunkel-Grenze) und die Sprungkante 11" des dem rechten Projektionsscheinwerfers 3 zugeordneten ersten Blendenelementes 7" zu der zweiten vertikalen Flanke 16 (vertikale Hell-Dunkel-Grenze) der Fernlicht-Gesamtlichtverteilung G abgebildet.

Den ersten Blendenelementen 7, 7', 7" ist jeweils eine Steuereinheit 21, 22 zugeordnet, die jeweils auf eine Stelleinheit 41 bzw. 42 einwirken, so dass zumindest die ersten Blendenelemente 7', 7" bzw. der linke Projektionsscheinwerfer 2 bzw. der rechte Projektionsscheinwerfer 3 jeweils um eine vertikale Achse verschwenkbar sind. Zu diesem Zweck weisen die Stelleinheiten 41, 42 jeweils einen Schwenkaktor, beispielsweise einen Elektromotor auf, mittels derer der linke Projektionsscheinwerfer 2 und der rechte Projektionsscheinwerfer 3 unabhängig voneinander in unterschiedliche Schwenkstellungen unter Aufrechterhaltung der Fernlicht-Betriebsstellung verschwenkbar ist. Gemäß Figur 2b befinden sich die ersten Blendenelemente 7, 7', 7" in einer mittleren Schwenkstellung.

Zur Erzielung einer Fernlicht-Gesamtlichtverteilung G gemäß Figur 2c, werden der linke Projektionsscheinwerfer und der rechte Projektionsscheinwerfer 3 synchron um einen vorgegeben Schwenkwinkel nach rechts verschwenkt. Zur Erzielung einer Fernlicht-Gesamtlichtverteilung G' gemäß Figur 2d werden der linke Projektionsscheinwerfer 2 und der rechte Projektionsscheinwerfer 3 synchron um einen vorgegebenen Schwenkwinkel nach links verschwenkt. Zur Bildung einer größeren Breite B des Lichtaussparungsbereiches 14' werden die ersten Blendenelemente 7', 7" bzw. der linke Projektionsscheinwerfer 2 und der rechte Projektionsscheinwerfer 3 in entgegengesetzte Richtungen verschwenkt, und zwar der linke Projektionsscheinwerfer 2 nach links und der rechte Projektionsscheinwerfer 3 nach rechts. Hierdurch kann ein verbreiterter Lichtaussparungsbereich 14' geschaffen werden, so dass die Blendung von breiteren vorausfahrenden Fahrzeugen oder mehreren nebeneinander angeordneten Fahrzeugen ermöglicht wird. Erreicht der Lichtaussparungsbereich 14' eine maximale Breite, in der nicht alle vorausfahrende und/oder entgegenkommende Fahrzeuge erfasst werden, wird mittels der Steuereinheiten 21, 22 die Blendeneinrichtung in die Abblendlichtbetriebsstellung verbracht, so dass eine unerwünschte Blendung des entgegenkommenden bzw. vorausfahrenden Verkehrsteilnehmers vermieden wird. Bei Verschwenken der ersten Blendenelemente 7', 7" bzw. der Projektionsscheinwerfer 2, 3 in Richtung der Fahrzeuglängsachse F kann es zu einer Überdeckung der Flanken 15, 16 der Teillichtverteilungen TL, TR kommen, so dass eine herkömmliche Fernlichtverteilung erzeugt wird.

Zur Verstellung der ersten Blendenelemente 7', 7" ist die Steuereinheit 21, 22 vorgesehen, an deren Eingang ein von einer Sensoreinheit 40 bereitgestelltes Sensorsignal liegt. Die Sensoreinheit 40 kann beispielsweise als ein Kamerasystem ausgebildet sein, das das gesamte Vorfeld (vorderseitiger Straßenraum) des Fahrzeugs erfasst und mögliche Fahrzeuge P detektiert. Die Sensoreinheit 40 ist derart aufgebaut, dass sie die Lage und/oder die Entfernung der Projektionsscheinwerfer 2, 3 zu einem entgegenkommenden und/oder vorausfahrenden Verkehrsteilnehmer (Fahrzeug) im Vorfeld erfasst. Die Steuereinheit 21, 22 kann einen Mikrokontroller bzw. einen Mikroprozessor mit einem Speicher umfassen, in dem ein Lichtsteuerungsprogramm integriert ist.

Vorzugsweise erfolgt ein Nachführen des Lichtaussparungsbereiches 14, 14' in Abhängigkeit von der aktuellen Lage des entgegenkommenden bzw. vorausfahrenden Fahrzeugs, so dass zum einen eine Blendung des entgegenkommenden bzw. vorausfahrenden Fahrzeugs verhindert und zum anderen eine möglichst große Ausleuchtung des Straßenraums gemäß einer Fernlichtverteilung ermöglicht wird. Vorzugsweise werden der linke Projektionsscheinwerfer 2 und der rechte Projektionsscheinwerfer 3 dynamisch um die vertikale Achse bei einem entgegenkommenden Fahrzeug nach und nach nach links verschwenkt, bis das entgegenkommende Fahrzeug die Projektionsscheinwerferanordnung passiert hat. Dabei wird der Lichtaussparungsbereich 14, 14' dem entgegenkommenden Fahrzeug unter Überdeckung desselben nachgeführt. Vorzugsweise verbreitert sich der Lichtaussparungsbereich 14, 14' in Abhängigkeit von der Entfernung des entgegenkommenden Fahrzeugs, so dass der Lichtaussparungsbereich 14, 14' bei einem entgegenkommenden Fahrzeug in großer Entfernung eine relativ kleine Breite und bei einem entgegenkommenden Fahrzeug in geringer Entfernung eine relativ große Breite aufweist. Die Lage des Lichtaussparungsbereiches 14, 14' in horizontaler Richtung sowie die Breite B des Lichtaussparungsbereiches 14, 14' ist derart gewählt, dass das entgegenkommende Fahrzeug in den Lichtaussparungsbereich 14, 14' liegt. Eine breite Ausleuchtung des Straßenraumes für den Fahrzeugführer links und rechts des entgegenkommenden Fahrzeugs wird hierdurch gewährleistet. Dadurch, dass das entgegenkommende Fahrzeug im Lichtaussparungsbereich selbst Licht abstrahlt, ergibt sich für den Fahrin horizontaler Richtung eine vollständig leuchtende Fläche.

Die Steuereinheiten 21, 22 wirken jeweils auf die Stelleinheiten 41 bzw. 42 ein, dass in Abhängigkeit von der Verkehrssituation die ersten Blendenelemente 7', 7" mittels des Schwenkaktors in horizontaler Richtung verschwenkt werden, so dass ein Lichtaussparungsbereich 14, 14' vorgegebner Breite B erzeugt wird. Der Schwenkaktor der Stelleinheiten 41, 42 kann auch zur Erzeugung eines Kurvenlichtes eingesetzt werden, wobei sich die Blendeneinrichtungen der Projektionsscheinwerfer 2, 3 in einer Abblendlicht-Betriebsstellung oder Fernlicht-Betriebsstellung befinden können. Darüber hinaus kann die Stelleinheit 41, 42 einen Schwenkaktor aufweisen zur Verstellung der Projektionsscheinwerfer 2, 3 um eine horizontale Achse, die quer zur optischen Achse verläuft. Hierdurch kann die horizontale Hell-Dunkel-Grenze nach oben oder unten verschoben werden.

## Patentansprüche

1. Projektionsscheinwerferanordnung für Fahrzeuge mit einem linken Projektionsscheinwerfer (2) und mit einem rechten Projektionsscheinwerfer (3), die jeweils enthalten:
- einen zwei Brennorte aufweisenden schalenförmigen Reflektor (5),
- eine in einem ersten Brennort des Reflektors angeordnete Lichtquelle (4),
- eine Linse (6), deren Brennpunkt in der Nähe des zweiten Brennpunktes des Reflektors (5) angeordnet ist,
- eine Blendeneinrichtung (7, 8; 9, 10; 12, 13), die zwischen der Linse (6) und dem Reflektor (5) angeordnet ist und die mindestens eine Blendkante aufweist, welche eine Hell-Dunkel-Grenze einer Lichtverteilung erzeugt,
**dadurch gekennzeichnet, dass** die Blendeneinrichtungen (7, 8; 9, 10; 12, 13) des linken Projektionsscheinwerfers (2) und des rechten Projektionsscheinwerfers (3) derart ausgebildet sind, dass in einer Fernlicht-Betriebsstellung der Blendeneinrichtungen (7, 8; 9, 10; 12, 13) mittels einer Blendenkante (7') des linken Projektionsscheinwerfers (2) eine erste Teillichtverteilung (TL) und mittels einer Blendenkante (7") des rechten Projektionsscheinwerfers (3) eine zweite Teillichtverteilung (TR) abgebildet werden, die sich zu einer Fernlicht-Gesamtlichtverteilung (G) überlagern, wobei die Fernlicht-Gesamtlichtverteilung (G) einen Lichtaussparungsbereich (14, 14') aufweist, der von gegenüberliegenden seitlichen zwei Flanken (15, 16) begrenzt ist, wobei die erste Flanke (15) Bestandteil der ersten Teillichtverteilung (TL) und die zweite Flanke (16) Bestandteil der zweiten Teillichtverteilung (TR) ist, und dass die Blendeneinrichtungen (7, 8; 9, 10; 12, 13) des linken Projektionsscheinwerfers (2) und des rechten Projektionsscheinwerfers (3) jeweils zwei relativ zueinander um eine parallel zu einer optischen Achse verlaufenden Drehachse (D) verschwenkbar angeordnete Blendenelemente (7, 8) aufweisen, wobei ein erstes Blendenelement (7) eine Blendkante zur Erzeugung der Fernlicht-Gesamtlichtverteilung (G) und ein zweites Blendenelement (8) eine Blendkante zur Erzeugung einer Abblendlichtverteilung aufweist.

2. Projektionsscheinwerferanordnung nach Anspruch 1, **dadurch gekennzeichnet, dass** die Blendenkante der Blendeneinrichtung (7, 7', 7") der Projektionsscheinwerfer (2, 3) auf einer der Fahrzeuglängsachse (F) abgewandten Seite einen in vertikaler Richtung gegenüber einem benachbarten Blendenkantenabschnitt (12, 13) erhöhten äußeren Blendenkantenabschnitt (9, 10) aufweist, mittels dessen ein in vertikaler Richtung von einem Basislichtbereich (17) der auf einer im Abstand von der Projektionsscheinwerferanordnung (1) positionierten Messwand dargestellten ersten Teillichtverteilung (TL) und zweiten Teillichtverteilung (TR) abragender Fernlichtfingerbereich (19, 20) gebildet wird, dessen Flanken (15, 16) einen solchen Abstand (B) zueinander aufweisen, dass ein vorgegebener Straßenraumbereich (P) ausgespart wird.

3. Projektionsscheinwerferanordnung nach Anspruch 1 oder 2, **dadurch gekennzeichnet, dass** die erste Flanke (15) der ersten Teillichtverteilung (TL) und die zweite Flanke (16) der zweiten Teillichtverteilung (TR) durch eine vertikal verlaufende Sprungkante (11, 11', 11") der Blendeneinrichtung erzeugt wird.

4. Projektionsscheinwerferanordnung nach einem der Ansprüche 1 bis 3, **dadurch gekennzeichnet, dass** die Blendenelemente (7, 8) plattenförmig ausgebildet sind, wobei das erste plattenförmige Blendenelement (7, 7', 7") die Blendkante enthaltend die vertikale Sprungkante (11, 11', 11") aufweist zur Erzeugung der vertikalen Flanken (15, 16) der Fernlicht-Gesamtlichtverteilung (G) und wobei das zweite plattenförmige Blendenelement (8, 8') eine in einer Abblendlicht-Betriebsstellung die vertikale Sprungkante (11, 11', 11") überdeckende Blendenfläche und eine Blendenkante zur Erzeugung einer Abblendlichtverteilung aufweist.

5. Projektionsscheinwerferanordnung nach Anspruch 4, **dadurch gekennzeichnet, dass** das erste Blendenelement (7, 7', 7") fest mit einem Tragrahmen des Projektionsscheinwerfers (2, 3) verbunden ist und dass das zweite Blendenelement (8, 8') schwenkbar um die horizontale Drehachse (D) an dem Tragrahmen und/oder dem ersten Blendenelement (7, 7', 7") gelagert ist.

6. Projektionsscheinwerferanordnung nach einem der Ansprüche 1 bis 5, **dadurch gekennzeichnet, dass** mindestens das erste Blendenelement (7, 7', 7") der Blendeneinrichtung oder des Projektionsscheinwerfers (2, 3) um eine vertikale Achse verschwenkbar gelagert ist, derart, dass in Abhängigkeit von der aktuellen Position und/oder Größe des entgegenkommenden und/oder vorausfahrenden Fahrzeugs der Lichtaussparungsbereich (14, 14') der Fernlicht-Gesamtlichtverteilung (G) in der Breite (B) veränderbar ist.

7. Projektionsscheinwerferanordnung nach einem der Ansprüche 1 bis 6, **dadurch gekennzeichnet, dass** eine Sensoreinheit (40) vorgesehen ist zur Erfassung des vorderseitig des Fahrzeugs erstreckenden Straßenraums (P), dass eine Steuereinheit (21, 22) vorgesehen ist, an deren Eingang ein Sensorsignal der Sensoreinheit (40) anliegt, dass eine Stelleinheit (41, 42) zur Verstellung der Blendeneinrichtung vorgesehen ist, an deren Eingang ein Steuersignal der Steuereinheit (21, 22) derart anliegt, dass fahrsituationsabhängig die Blendenkanten der Blendeneinrichtungen eingestellt werden zur Bildung der Fernlicht-Gesamtlichtverteilung (G) und/oder der Abblendlichtverteilung.

8. Projektionsscheinwerferanordnung nach Anspruch 7, **dadurch gekennzeichnet, dass** zumindest das erste Blendenelement (7, 7', 7") und/oder die Projektionsscheinwerfer (2,3) in Abhängigkeit von dem die aktuelle Position des entgegenkommenden und/oder vorausfahrenden Fahrzeugs ermittelnden Sensorsignal um eine vertikale Achse verschwenkbar sind, so dass der Lichtaussparungsbereich (14, 14') unter Überdeckung der Position mindestens eines Teils des im Fahrzeugvorfeld befindlichen Fahrzeugs nachgeführt wird.

9. Projektionsscheinwerferanordnung nach einem der Ansprüche 7 bis 8, **dadurch gekennzeichnet, dass** mindestens das erste Blendenelement (7, 7', 7") der Blendeneinrichtungen oder der Projektionsscheinwerfer (2, 3) in Abhängigkeit von dem die aktuelle Position des entgegegenkommenden und/oder vorausfahrenden Fahrzeugs ermittelnden Sensorsignals um eine horizontale Achse verschwenkbar ist, so dass die entsprechende Blendenkante kontinuierlich abgesenkt wird, bis die Fernlicht-Gesamtlichtverteilung (G) von einer Fernlicht-Betriebsstellung in eine Abblendlicht-Betriebsstellung verstellt ist.

10. Projektionsscheinwerferanordnung nach einem der Ansprüche 1 bis 9, **dadurch gekennzeichnet, dass** die Stelleinheit (41) einen dem linken Projektionsscheinwerfer (2) zugeordneten linken Schwenkaktor und die Stelleinheit (42) einen dem rechten Projektionsscheinwerfer (3) zugeordneten rechten Schwenkaktor umfasst, mittels derer der linke Projektionsscheinwerfer (2) und der rechte Projektionsscheinwerfer (3) unabhängig voneinander um die vertikale Drehachse (D) verschwenkbar sind.

## Claims

1. Projection headlight assembly for vehicles having a left-hand projection headlight (2) and a right-hand projection headlight (3) each comprising a shell-shaped reflector (5) with two light spots, a light source (4) disposed in a first light spot of the reflector, a lens (6) whose focal point is close to the second light spot of the reflector (5), and a blind assembly (7, 8; 9, 10; 12, 13) disposed between the lens (6) and the reflector (5) and provided with at least one blind edge generating a dark-light interface of a light distribution pattern; **characterized in that** said blind assemblies (7, 8; 9, 10; 12, 13;) of the left-hand projection headlight (2) and the right-hand projection headlight (3) are designed such that with said assemblies (7, 8; 9, 10; 11, 12) in a main beam state a blind edge (7') of the left-hand projection headlight (2) is producing a first partial light distribution pattern (TL) and a blind edge (7") of the right-hand projection headlight (3) a second partial light distribution pattern (TR) which distribution patterns are superimposing each other to create a main beam total light distribution pattern (G) which latter has a no-light gap (14, 14') confined by two lateral flanks (15, 16) wherein the first flank (15) is part of the first partial light distribution pattern (TL) and the second flank (16) is part of the second partial light distribution pattern (TR); and that said blind assemblies (7, 8; 9, 10; 11, 12) of the left-hand projection headlight (2) and the right-hand projection headlight (3) each have two blind elements (7, 8) which are tiltable relative to each other about a swivel axis (D) that extends parallel to an optical axis wherein a first blind element (7) has a blind edge for producing the main beam total light distribution pattern (G) and a second blind element (8) has a blind edge for producing a low beam light distribution pattern.

2. Protection headlight assembly according to Claim 1, **characterized in that** the blind edge of blind assembly (7, 7', 7") of the projection headlights (2, 3) has on a side facing away from the vehicle longitudinal axis (F) an outer blind edge section (9, 10) which is higher in vertical direction than an adjacent blind section (12, 13) and which forms a main beam finger area (19, 20) protruding in a vertical direction from a basic light area (17) of the first partial light distribution pattern (TL) and the second partial light distribution pattern (TR) which is represented on a measuring wall arranged distant from the projection headlight assembly (1) and the flanks (15, 16) of which finger area are spaced apart to such an extent (B) that a given road area (P) is left uncovered.

3. Projection headlight assembly according to Claim 1 or 2, **characterized in that** the first flank (15) of the first partial light distribution pattern (TL) and the second flank (16) of the second partial light distribution pattern (TR) are formed by a vertically expending edge (11, 11', 11") of the blind assembly.

4. Projection headlight assembly according to any of the preceding Claims 1 to 3, **characterized in that** the blind elements (7, 8) are plate shaped wherein the first plate shaped blind elements (7, 7', 7") comprising the blind edge includes the vertical edge (11, 11', 11") for establishing said vertical flanks (15, 16) of the main beam total light distribution pastern (G) and wherein the second plate shaped blind element (8, 8') has a blind area covering up the vertical edge (11, 11', 11") while in a low beam light statue and a blind edge for producing a low beam light distribution pattern.

5. Projection headlight assembly according to Claim 4, **characterized in that** the first blind element (7, 7', 7") is durably connected to a supporting frame of the projection headlight (2, 3) and that the second blind element (8, 8') is tiltable around a horizontal swivel axis (D) on said supporting frame and/or said first blind element (7, 7', 7").

6. projection headlight assembly according to any of the preceding Claims 1 to 5, **characterized in that** the first blind element (7, 7', 7") at least of the blind assembly or the projection headlight (2, 3) is tiltable around a vertical axis such that dependent on the actual position and/or the size of an approaching vehicle and/or a vehicle ahead the no-light gap (14, 14') of the main beam light distribution pattern (B) is variable in width (B).

7. projection headlight assembly according to any of the preceding Claims 1 to 6, **characterized in that** a sensor unit (40) is arranged to detect the road area (P) ahead of the vehicle; that a control unit (21, 22) is provided to the input of which a sensor signal from the sensor unit (40) is applied; and that there is an adjusting unit (41, 42) for adjusting the blind assembly to the input of which a control signal from said control unit (21, 22) is applied such that the edges of the blind assemblies are adjusted to provide either a main beam total light distribution pattern (G) or a low beam light distribution pattern dependent on a specific travel situation.

8. Projection headlight assembly according to Claim 7, **characterized in that** the first blind element (7, 7', 7") and/or the projection headlights (2, 3) are tiltable around a vertical axis dependent on the sensor signal representing the actual position of an approaching vehicle and/or a vehicle ahead such that the no-light area (14, 14') may be adjusted while covering up the position of at least part of a vehicle ahead.

9. projection headlight assembly according to any of the Claims 7 to 8, **characterized in that** the first blind element (7, 7', 7") at least of the blind assemblies or the projection headlights (2, 3) is tiltable around a horizontal axis dependent on the sensor signal representing an approaching vehicle or a vehicle ahead such that the respective blind edge will be continually lowered until the main beam total light distribution pattern (G) has been changed over from a main beam state to a low beam state.

10. Projection headlight assembly according to any of the preceding Claims 1 to 9, **characterized in that** the adjusting unit (41) comprises a left-hand tilt actuator assigned to the left-hand projection headlight and a right-hand tilt actuator assigned to the right-hand projection headlight to tilt the left-hand projection headlight (2) and the right-hand projection headlight (3) around said vertical axis (D) independently of each other.

## Revendications

1. Agencement de phares de projection pour véhicules automobiles, avec un phare de projection gauche (2) et avec un phare de projection droit (3), qui comprennent chaud :
- un réflecteur (5) en forme de coquille, qui présente deux foyers
- une source lumineuse (4), qui est disposée dans un premier foyer du réflecteur,
- une lentille (6), dont le foyer est disposé à proximité du deuxième foyer du réflecteur (5),
- un système de diaphragmes (7, 8 ; 9, 10 ; 12, 13), qui est disposé entre la lentille (6) et le réflecteur (5), et présente au moins une arête de diaphragme, qui génère une limite clair-obscur d'une distribution de lumière,
**caractérisé en ce que** les systèmes de diaphragme (7, 8 ; 9, 10 ; 12, 13) du phare de projection gauche (2) et du phare de projection droit (3) sont réalisés de sorte que, lorsque les système de diaphragmes (7, 8 ; 9, 10 ; 12, 13) sont en position en feu de route, une première distribution de lumière partielle (TL) est réalisée au moyen d'une arête de diaphragme (7') du phare de projection gauche (2), et une deuxième distribution de lumière partielle (TR) est réalisée au moyen d'une arête de diaphragme (7") du phare de projection droit (3), lesquelles distributions de lumière se chevauchent en formant une distribution totale de lumière en feu de route (G), la distribution totale de lumière en feu de route (G) présentant une zone non éclairée (14, 14'), qui est limitée par deux flancs (15, 16) latéraux, opposés, le premier flanc (15) étant partie composante d'une première distribution de lumière partielle (TL) et le deuxième flanc (16) étant partie composante d'une deuxième distribution de lumière partielle (TR), et **en ce que** les systèmes de diaphragmes (7, 8 ; 9, 10 ; 12, 13) du phare de projection gauche (2) et du phare de projection droit (3) présentent chacun deux éléments de diaphragme (7, 8), qui peuvent pivoter l'un par rapport à l'autre, autour d'un axe de rotation (17) s'étendant parallèlement à un axe otique, sachant qu'un premier élément de diaphragme (7) présente une arête de diaphragme pour générer la distribution totale de lumière en feu de route (G) et qu'un deuxième élément de diaphragme (8) présente une arête de diaphragme pour générer la distribution de lumière en feu de croisement.

2. Agencement de phare de projection selon la revendication 1, **caractérisé en ce que** l'arête de diaphragme du système de diaphragmes (7, 7', 7") des phares de projection gauche et droit (2, 3) présente, sur un côté opposé à l'axe longitudinal (F) du véhicule automobile, une section d'arête de diaphragme (9, 10) extérieure, surélevée par rapport à une section d'arête de diaphragme voisine (12, 13), au moyen de laquelle est formée une zone de lumière en feu de route en forme de doigt (19, 20), qui est en saillie, dans la direction verticale, d'une zone de lumière de base (17) de la première distribution de lumière partielle (TL) et de la deuxième distribution de lumière partielle (TR), représentées sur une paroi de mesurage positionnée à distance de l'agencement de phares de projection (1), et dont les flancs (15, 16) présentent, entre eux, un intervalle (B) tel qu'une zone de route (P) prédéterminée est épargnée.

3. Agencement de phares de projection selon revendication 1 ou 2, **caractérisé en ce que** le premier flanc (15) de la première distribution de lumière partielle (TL) et le deuxième flanc (16) de la deuxième distribution de lumière partielle (TR) sont générés par un ressaut (11, 11', 11") du système de diaphragmes.

4. Agencement de phares de projection selon l'une des revendications 1 à 3, **caractérisé en ce que** les éléments de diaphragme (7, 8) sont réalisés en forme de plaques, le premier élément de diaphragme (7, 7', 7"), qui comprend l'arête de diaphragme, présentant le ressaut vertical (11, 11', 11") pour générer les flancs verticaux (15, 16) de la distribution totale de lumière en feu de route (G), et le deuxième élément de diaphragme (8, 8') en forme de plaque présentant une surface de diaphragme, qui recouvre le ressaut vertical (11, 11', 11") dans une position en feu de croisement, et une arête de diaphragme pour générer une distribution de lumière en feu de croisement.

5. Agencement de phares de projection selon la revendication 4, **caractérisé en ce que** le premier élément de diaphragme (7, 7', 7") est relié fixement au cadre de support du phare de projection (2, 3) et que le deuxième élément de diaphragme (8, 8') est monté à pivotement autour de l'axe de rotation (D) horizontal, sur le cadre de support et / ou sur le premier élément de diaphragme (7, 7', 7").

6. Agencement de phares de projection selon l'une des revendications 1 à 5, **caractérisé en ce qu'**au moins le premier élément de diaphragme (7, 7', 7") du système de diaphragmes ou le phare de projection (2, 3) est monté à pivotement autour d'un axe vertical de sorte que la zone non éclairée (14, 14') de la distribution totale de lumière en feu de route (G) puisse être modifiée en largeur (B) en fonction de la position actuelle et / ou de la grandeur du véhicule, qui arrive en sens inverse et / ou roule en avant.

7. Agencement de phare de projection selon l'une des revendications 1 à 6, **caractérisé en ce qu'**une unité de détection (40) est prévue pour la détection de la portion de route (P) s'étendant devant le véhicule automobile, qu'une unité de commande (21, 22) est prévue, à l'entrée de laquelle est reçu un signal de détection de l'unité de détection (40), que, pour le réglage du système de diaphragmes, est prévue une unité de réglage (41, 42), à l'entrée de laquelle est reçu un signal de commande de l'unité de commande (21, 22) de sorte que les arêtes de diaphragmes du système de diaphragmes soient réglées en fonction de la situation de conduite pour former la distribution totale de lumière en feu de route (G) et / ou la distribution de lumière en feu de croisement.

8. Agencement de phares de projection selon la revendication 7, **caractérisé en ce qu'**au moins le premier élément de diaphragme (7, 7', 7") et / ou les phares de projection (2, 3) peuvent pivoter autour d'un axe vertical, en fonction du signal de détection indiquant la position actuelle du véhicule, qui arrive en sens inverse et / ou roule devant, de sorte que la zone non éclairée (14, 14') soit asservie pour recouvrir la position d'au moins une partie du véhicule se trouvant dans la région en avant du véhicule automobile.

9. Agencement de phares de projection selon l'une des revendications 7 à 8, **caractérisé en ce qu'**au moins le premier élément de diaphragmes (7, 7', 7") des systèmes de diaphragmes ou les phares de projection (2, 3) peuvent pivoter autour d'un axe horizontal, en fonction du signal de détection déterminant la position actuelle du véhicule, qui vient en sens inverse ou roule devant, de sorte que l'arête de diaphragme correspondante soit abaissée en continu jusqu'à ce que la distribution totale de lumière en feu de route (G) soit réglée d'une position en feu de route à une position en feu de croisement.

10. Agencement de phares de projection selon l'une des revendications 1 à 9, **caractérisé en ce que** l'unité de réglage (41) comprend un actionneur de pivotement gauche, associé au phare de projection gauche (2), et l'unité de réglage (41) comprend un actionneur de pivotement droit, associé au phare de projection droit (3), au moyen desquels le phare de projection gauche (2) et le phare de projection droit (3) peuvent pivoter indépendamment l'un de l'autre, autour de l'axe de rotation (D) vertical.
